# EUROPÄISCHE PATENTSCHRIFT

(11) **EP 2 500 888 B1**
(45) Veröffentlichungstag und Bekanntmachung des Hinweises auf die Patenterteilung: **05.06.2013**
(21) Anmeldenummer: 11450037.4
(22) Anmeldetag: 17.03.2011
(51) Int. Cl.: G08G 1/14, B60L 11/18

(54) **Parkplatz mit Reservierungssystem**
Parking space with reservation system
Parc de stationnement avec système de réservation

(43) Veröffentlichungstag der Anmeldung: 19.09.2012
(73) Patentinhaber: Kapsch TrafficCom AG, 1120 Wien (AT)
(72) Erfinder: Nagy, Oliver, 1190 Wien (AT)
(74) Vertreter: Weiser, Andreas

(56) Entgegenhaltungen:
- EP-A1- 1 986 172
- DE-A1-102007 052 819
- GB-A- 2 247 554
- US-A- 6 107 942
- US-A1- 2004 068 433
- US-A1- 2005 002 544
- US-A1- 2010 191 585

## Beschreibung

Die vorliegende Erfindung betrifft einen Parkplatz mit einer Vielzahl von Stellplätzen für Fahrzeuge, die Kennzeichentafeln mit OCR-lesbaren Fahrzeugkennzeichen und Onboard-Units mit funkauslesbaren Funkkennungen haben, gemäß dem Oberbegriff des Anspruchs 1.

In der EP 1 986 172 wird ein allgemeines Reservierungssystem mit Funkauslesung von Identifikationsdaten beim Ein- und Ausfahren offenbart. Allerdings sieht diese Schrift keinerlei Maßnahmen zur Erhöhung von Funktions- und Manipulationssicherheit oder zur Überwachung vor.

Ein derartiger Parkplatz ist aus der EP 1 986 172 bekannt. Die Schrift US 2004/0068433 A1 zeigt ein Parkplatzmanagement- und -reservierungssystem mit einem Zentralrechner, in den Benutzer Stellplatzreservierungen z.B. über das Internet einspeisen können, und einer Kamera an der Einfahrt zum OCR-Lesen (optical character recognition) der Fahrzeugkennzeichen der einfahrenden Fahrzeuge, um einen Schranken für Fahrzeuge mit Stellplatzreservierungen zu öffnen. Parkwächter patroullieren mit mobilen, über Funk mit dem Zentralrechner in Verbindung stehenden Handgeräten zur stichprobenartigen OCR-Erfassung der Fahrzeugkennzeichen der geparkten Fahrzeuge, um Falschparker zu ahnden. Derartige Systeme erreichen zwar einen hohen Automatisierungsgrad, erfordern jedoch immer noch manuelle Kontrollvorgänge und sind überdies anfällig für fehlerhaft gelesene oder sogar gefälschte Fahrzeugkennzeichen.

Aus der DE 10 2007 052 819 A1 ist es an sich bekannt, OCR-Kennzeichenlesekameras in einem Parkhaus zum Wiederauffinden eines geparkten Fahrzeugs zu verwenden.

Die Erfindung setzt sich zum Ziel, die Nachteile der bekannten Systeme zu überwinden und eine verbesserte Parkplatzlösung zur vollautomatischen Reservierung, Freigabe und Kontrolle einer Vielzahl von Stellplätzen zu schaffen.

Dieses Ziel wird mit einem Parkplatz nach Anspruch 1 und einem Verfahren nach Anspruch 9 erreicht.

Die Erfindung beruht auf dem neuartigen Ansatz, jeden einzelnen Stellplatz mit einer OCR-Kameraeinheit zur Kennzeichenerfassung auszustatten, in Verbindung mit einer Funkbake, welche Funk-Onboard-Units (OBUs) der Fahrzeuge an der Einfahrt auslesen kann. Die Identifizierung eines einfahrenden Fahrzeugs erfolgt damit auf fälschungssichere und störungsunanfällige Weise über Funk, wogegen die Lokalisierung und Validierung des Fahrzeugs auf dem Stellplatz wiederum mit hoher Ortungssicherheit durch optische Erkennung (OCR) erfolgt. Die Kombination aus zentraler Funk-Identifizierung und dezentraler optischer Lokalisierung und Validierung ermöglicht einen vollautomatischen, hochsicheren und störungsunanfälligen Betrieb des Parkplatzes. Dabei können auch alle in der Technik bekannten Funktionalitäten wie Vorabreservierung über das Internet, automatische Abrechnung der Parkgebühren, automatische Ahndung von Parkvergehen und statistische Auswertungen bereitgestellt werden.

Eine bevorzugte Ausführungsform der Erfindung zeichnet sich dadurch aus, dass an der Einfahrt eine zusätzliche Kameraeinheit zum OCR-Lesen des Fahrzeugkennzeichens eines einfahrenden Fahrzeugs und Melden an den Zentralrechner montiert und der Zentralrechner ferner dafür ausgebildet ist zu überprüfen, ob eine gemeldete Funkkennung und ein von der zusätzlichen Kameraeinheit gemeldetes Fahrzeugkennzeichen einander in einer Stellplatzreservierung zugeordnet sind, und wenn nicht, dies zu protokollieren. Dadurch kann eine zusätzliche Validierungsstufe an der Einfahrt eingerichtet werden, welche die Sicherheit gegenüber missbräuchlichen Verwendungen des Parkplatzes weiter erhöht.

Zur raschen Information des Benutzers kann an der Einfahrt ferner eine vom Zentralrechner gesteuerte Anzeigetafel montiert und der Zentralrechner dafür ausgebildet werden, den Stellplatz, der einer ihm gemeldeten Funkkennung in einer Stellplatzreservierung zugeordnet ist, auf der Anzeigetafel anzuzeigen.

Der Parkplatz der Erfindung eignet sich für das Zusammenwirken mit funkauslesbaren Onboard-Units beliebiger Art, z.B. von Fahrzeugen mitgeführten Transpondern, RFID-Chips usw. Bevorzugt ist die Funkbake eine DSRC-Funkbake zum Funkauslesen von Onboard-Units eines DSRC- (dedicated short range communication) -Straßenmautsystems. DSRC-Funkbaken bieten aufgrund ihres begrenzten Kommunikationsbereiches, der auf den Einfahrtsbereich des Parkplatzes beschränkt werden kann, erhöhte Störungssicherheit und eine eindeutige Zuordnung und Lokalisierung zur aktuell gelesenen Onboard-Unit.

Die Parkplatzlösung der Erfindung eignet sich gemäß einem weiteren Aspekt besonders für eine Ausstattung der Stellplätze mit elektrischen Fahrzeug-Ladestationen ("Stromtankstellen"), welche vom Zentralrechner gesteuert werden, indem dieser nach erfolgreicher Überprüfung des von der Kameraeinheit des jeweiligen Stellplatzes gemeldeten Fahrzeugkennzeichens die Ladestation zum Laden freischaltet. Aufgrund der erfindungsgemäßen Kombination aus Funk-Identifizierung und OCR-Lokalisierung der Fahrzeuge wird eine hohe Validierungssicherheit des auf einem Stellplatz befindlichen Fahrzeuges erreicht, wodurch eine missbräuchliche Verwendung von Ladestationen, z.B. der Ladestation eines benachbarten (nicht reservierten) Stellplatzes, ausgeschlossen ist.

Bevorzugt enthält die Stellplatzreservierung auch fahrzeugspezifische Ladeparameter, welche der Zentralrechner an die Ladestation des Stellplatzes senden kann. Solche Ladeparamenter können beispielsweise bei der Reservierung des Stellplatzes vom Benutzer in den Zentralrechner eingegeben werden oder - bevorzugt - mittels Funkbake aus der Onboard-Unit ausgelesen und der Stellplatzreservierung automatisch hinzugefügt werden. Zu diesem Zweck werden die fahrzeugspezifischen Ladeparameter dementsprechend in der Onboard-Unit funkauslesbar hinterlegt.

Diese Eigenschaft ist besonders günstig, wenn der Benutzer keine Vorab-Stellplatzreservierung vorgenommen hat, sondern eine "ad-hoc"-Stellplatzreservierung direkt an der Einfahrt tätigt, um z.B. einen gerade freien Stellplatz mit einer Ladestation sofort zu benutzen. Sämtliche fahrzeugspezifischen Ladeparameter sind lokal auf der Onboard-Unit gespeichert und stehen der Ladestation damit sofort zur Verfügung. Dadurch brauchen auch keine Nutzerdaten z.B. über Datenleitungen von entfernten übergeordneten Zentralen angefragt werden, was für eine ad-hoc-Stellplatzreservierung aufgrund der meist längeren Dauer solcher entfernter Abfragen ungünstig wäre.

Die Verwendung einer Kameraeinheit für die OCR-Lokalisierung eines Fahrzeuges auf einem mit einer Ladestation ausgestatteten Stellplatz ermöglicht auch die weitere Option, die Kameraeinheit gleichzeitig zur Überwachung des Ladevorganges einzusetzen, indem die Kameraeinheit auch ein Wärmebild des Fahrzeugs während des Ladevorgangs aufnimmt, um bei Überschreitung einer Maximaltemperatur einen Alarm auszulösen. Dadurch können gefährliche Überhitzungen z.B. aufgrund von defekten Fahrzeugbatterien oder fehlerhaften Ladevorgängen verhindert werden.

Die an den Stellplätzen eingesetzten Kameraeinheiten können gemäß einem weiteren Aspekt der Erfindung nicht nur zur OCR-Lokalisierung und -Validierung der parkenden Fahrzeuge sondern gleichzeitig auch zur optischen Kontrolle ihrer korrekten Parkpositionen mitverwendet werden. Demgemäß zeichnet sich eine weitere bevorzugte Ausführungsform der Erfindung dadurch aus, dass zumindest ein Stellplatz mit einer Bodenmarkierung versehen ist, die von seiner Kameraeinheit erfassbar ist, wobei die Kameraeinheit zusammen mit dem Zentralrechner ein Verdecken der Bodenmarkierung durch ein darauf parkendes Fahrzeug detektiert und protokolliert.

Bevorzugt können dazu auch zumindest zwei Kameraeinheiten pro Stellplatz zur gemeinsamen Überwachung seiner Bodenmarkierung vorgesehen sein, um z.B. alle Bereiche rund um ein Fahrzeug erfassen und überwachen zu können.

Die Bodenmarkierungen können einfache Farbmarken auf dem Boden sein. Gemäß einem weiteren Merkmal der Erfindung werden sie bevorzugt von zumindest einer Leuchteinheit auf den Boden projiziert. Die Leuchteinheit kann beispielsweise ein ganzes Lichtmuster auf den Boden projizieren, auch variabel, sodass z.B. je nach Belegungsaufkommen des Parkplatzes verschiedene Größen von Stellplätzen vorgegeben werden können. Auch lässt sich mit einem projizierten Lichtmuster eine Überwachung der Parkpositionen nach dem Lichtschnitt-Verfahren aufbauen, indem die Leuchteinheit bevorzugt einen Lichtfächer auf den Boden projiziert und die Kameraeinheit(en) außerhalb des Lichtfächers liegt/liegen. Wie in der Lichtschnitt-Technik bekannt, können dadurch Übertretungen der Bodenmarkierungen als Verzerrungen der projizierten Lichtfächer-Schnittlinien wahrgenommen werden.

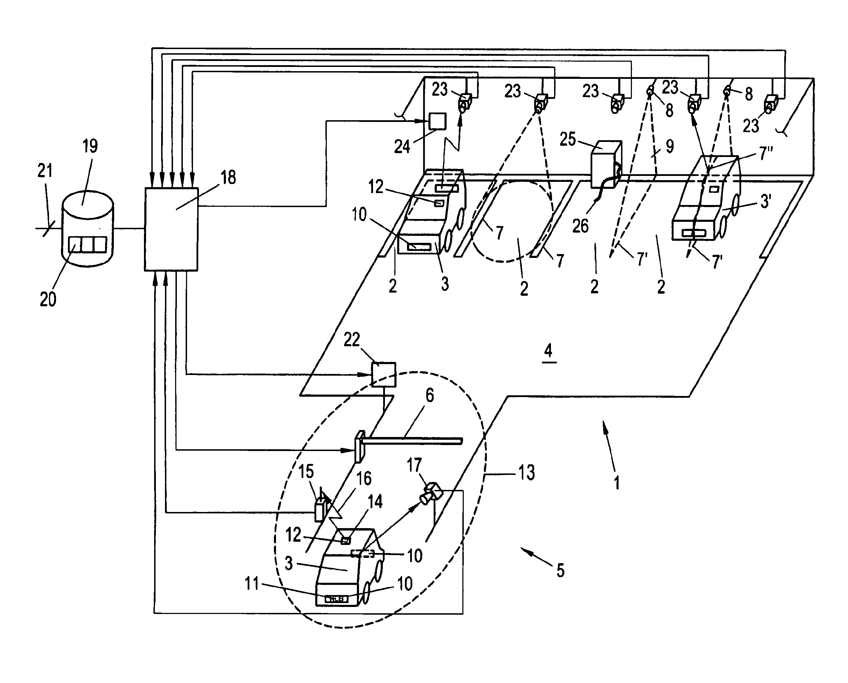

Die Erfindung wird nachstehend anhand eines in der beigeschlossenen Zeichnung dargestellten Ausführungsbeispiels näher erläutert. Die einzige Fig. 1 der Zeichnung zeigt einen erfindungsgemäßen Parkplatz in einer schematischen Perspektivansicht zusammen mit blockschaltbildlich dargestellten elektrischen Komponenten.

In Fig. 1 ist ein Parkplatz 1 mit einer Vielzahl von Stellplätzen 2 für jeweils ein Fahrzeug 3 gezeigt. Die Stellplätze 2 sind über eine vorgelagerte Verkehrsfläche 4 von einer gemeinsamen Einfahrt 5 her erreichbar. Die Einfahrt 5 ist beispielsweise mit einem Schranken 6 versehen, obwohl dies nicht zwingend ist. Die einzelnen Stellplätze 2 sind jeweils durch Bodenmarkierungen 7, 7' voneinander abgeteilt bzw. getrennt. Die Bodenmarkierungen 7 können beispielsweise mit Farbe auf den Boden aufgetragen sein oder - wie im Falle der Bodenmarkierungen 7' - von einer oder mehreren Leuchteinheiten 8 als Lichtmarkierungen auf den Boden projiziert sein, beispielsweise in Form von Lichtfächern 9, wie später noch ausführlicher erörtert wird.

Jedes der Fahrzeuge 3, die den Parkplatz 1 benutzen, besitzt in herkömmlicher Art und Weise eine oder mehrere Kennzeichentafeln 10, auf denen sein Fahrzeugkennzeichen 11 optisch lesbar aufgedruckt ist. Die Fahrzeuge 3 führen ferner funkabfragbare Fahrzeuggeräte (Onboard-Units, OBUs) 12 mit sich, wie sie beispielsweise für den Betrieb in elektronischen Straßenmautsystemen Verwendung finden und jeweils eine eindeutige, über Funk auslesbare Funkkennung 14 (OBU-ID) haben. Die Funkkennung 14 kennzeichnet in der Regel (nur) die Onboard-Unit 12, kann aber auch direkt dem Fahrzeugkennzeichen 11 entsprechen oder dieses enthalten. Die Onboard-Units 12 können eigene Geräte oder jeweils Bestandteil der Fahrzeugelektronik der Fahrzeuge 3 sein.

An der Einfahrt 5 ist weiters eine Funkbake 15 zum Funkauslesen (Pfeil 16) der Funkkennung 14 der Onboard-Unit 12 eines einfahrenden Fahrzeuges 3 aufgestellt. Die Funkbake 15 hat bevorzugt einen auf den Einfahrtsbereich der Einfahrt 5 begrenzten Funkabdeckungsbereich 13.

Es versteht sich, dass die Funkbake 15 auch mehrere verteilte Funkeinheiten haben kann, z.B. bei einer Einfahrt 5 mit mehreren Fahrspuren, denen jeweils eine separate Funkeinheit mit einem auf diese Fahrspur begrenzten eigenen Funkabdeckungsbereich zugeordnet ist.

Die Funkkommunikation 16 zum Funkauslesen der Funkkennung 14 erfolgt bevorzugt nach dem DSRC-Standard (dedicated short range communication), und die Funkbake 15 ist demgemäß eine DSRC-Funkbake und die Onboard-Unit 12 eine DSRC-OBU. Alternativ könnte die Funkkommunikation 16 auch nach anderen Kurzstrecken-Kommunikationsstandards erfolgen, z.B. WLAN (wireless local area network), WAVE (wireless access in a vehicle environment), Bluetooth^{®}, RFID (radio frequency identification), NFC (near field communication), usw.

An der Einfahrt 5 ist ferner eine Kameraeinheit 17 zum optischen Lesen des Fahrzeugkennzeichens 11 eines einfahrenden Fahrzeuges 3 montiert. Die Funkbake 15 und die Kameraeinheit 17 der Einfahrt 5 sind an einen Zentralrechner 18 des Parkplatzes 1 angeschlossen. Die Funkbake 15 meldet eine von ihr funkabgefragte Funkkennung 14 an den Zentralrechner 18, und die Kameraeinheit 17 meldet ein von ihr gelesenes Fahrzeugkennzeichen 11 ebenfalls an den Zentralrechner 18.

Das von der Kameraeinheit 17 gelesene Fahrzeugkennzeichen 11 wird bevorzugt mittels optischer Zeichenerkennung (optical character recognition, OCR) in einen alphanumerischen Wert umgewandelt und dem Zentralrechner 18 gemeldet. Es versteht sich, dass der OCR-Auswertungsalgorithmus auch im Zentralrechner 18 ablaufen kann; die entsprechenden OCR-Komponenten des Zentralrechners 18 werden hier ebenfalls zur Kameraeinheit 17 gezählt, falls sie nicht direkt in dieser implementiert sind.

Der Schranken 6 kann, falls vorhanden, ebenfalls vom Zentralrechner 18 angesteuert werden.

Der Zentralrechner 18 verfügt über eine Datenbank 19 mit Stellplatzreservierungen 20, welche jeweils eine Nummer bzw. einen Ort eines Stellplatzes 2 sowie ein Fahrzeugkennzeichen 11 und eine diesem zugeordnete Funkkennung 14 eines Fahrzeuges 3 enthalten. Die Stellplatzreservierungen 20 können beispielsweise vom Benutzer vorab in die Datenbank 19 eingetragen worden sein, z.B. über ein Webinterface 21 des Zentralrechners 18 oder seiner Datenbank 19.

Bei der Einfahrt eines Fahrzeuges 3 meldet die Funkbake 15 die Funkkennung 14 des Fahrzeuges 3 an den Zentralrechner 18 und dieser ermittelt die zur Funkkennung 14 zugehörige Stellplatzreservierung 20 aus der Datenbank 19. Wenn die (optionale) Kameraeinheit 17 vorgesehen ist, kann diese zusätzlich das OCR-gelesene Fahrzeugkennzeichen 11 an den Zentralrechner 18 melden und dieser das Fahrzeugkennzeichen 11 mit dem in der Stellplatzreservierung 20 gespeicherten Fahrzeugkennzeichen gegenprüfen.

Bei einer für die gemeldete Funkkennung 14 gültigen Stellplatzreservierung 20 und optional bei erfolgreicher Gegenprüfung auch des Fahrzeugkennzeichens 11 steuert der Zentralrechner 18 den Schranken 6 - falls vorhanden - zum Öffnen an. Ferner kann der Zentralrechner 18 auf einer Anzeigetafel 22 an der Einfahrt 5 dem Benutzer des Fahrzeuges 3 die Stellplatzreservierung 20 anzeigen, um ihm z.B. die Nummer oder den Ort des Stellplatzes 2 visuell mitzuteilen. Eine oder mehrere Anzeigetafeln 22 können auch an den Stellplätzen 2 angeordnet sein, um den Fahrer auf den für ihn reservierten Stellplatz einzuweisen.

Anstelle der geschilderten Überprüfung einer "Vorab"-Stellplatzreservierung kann alternativ auch eine "ad-hoc"-Stellplatzreservierung direkt an der Einfahrt 5 vorgenommen werden. In diesem Fall meldet die Funkbake 15 die funkabgefragte Funkkennung 14 und die Kameraeinheit 17 das OCR-gelesene Fahrzeugkennzeichen 11 an den Zentralrechner 18 und dieser ermittelt einen freien Stellplatz 2 und ordnet Funkkennung 14, Fahrzeugkennzeichen 11 und Nummer des Stellplatzes 2 einander in einer Stellplatzreservierung 20 in der Datenbank 19 zu.

Wenn die Funkkennung 14 direkt dem Fahrzeugkennzeichen 11 entspricht oder dieses enthält, kann bereits alleine aus der Meldung der Funkkennung 14 an den Zentralrechner 18 eine Stellplatzreservierung 20 angelegt werden; in diesem Fall kann die (optionale) Kameraeinheit 17 für die Gegenprüfung des in der Funkkennung 14 angegebenen Fahrzeugkennzeichens 11 mit dem OCR-gelesenen Fahrzeugkennzeichen 11 im Zentralrechner 18 eingesetzt werden.

Der Benutzer fährt anschließend mit dem Fahrzeug 3 auf den für ihn reservierten Stellplatz 2. Jeder Stellplatz 2 ist mit einer eigenen Kameraeinheit 23 ausgestattet, welche das Fahrzeugkennzeichen 11 des darauf parkenden (oder auf diesen einfahrenden, dies wird hier als vom Begriff "Parken" mitumfasst angesehen) OCR-erfasst. Die Kameraeinheiten 23 der Stellplätze 2 melden jeweils die von ihnen OCR-gelesenen Fahrzeugkennzeichen 11 an den Zentralrechner 18, wobei die OCR-Algorithmen auch auf dem Zentralrechner 18 laufen können, was hier von dem Begriff "OCR-Kameraeinheiten" 23 mitumfasst ist.

Der Zentralrechner 18 ist dafür programmiert, nach Meldung einer Funkkennung 14 von der Funkbake 15 zu überprüfen, ob anschließend - bevorzugt innerhalb einer vorgegebenen Zeitspanne - von der Kameraeinheit 23 jenes Stellplatzes 2, der in der Stellplatzreservierung 20 mit dieser Funkkennung 14 angegeben ist, auch das in dieser Stellplatzreservierung 20 angegebene Fahrzeugkennzeichen 11 gemeldet wird. Wenn ja, handelt es sich um einen ordnungsgemäßen Parkvorgang, welcher z.B. vom Zentralrechner 18 auch entsprechend vergebührt werden kann. Wenn nein, hat das Fahrzeug 3 offensichtlich einen falschen Stellplatz 2 erreicht, und dieser Umstand wird vom Zentralrechner 18 zumindest protokolliert; optional können entsprechende Alarme, Warnmeldungen, Warnansagen über Lautsprecher oder Warnanzeigen auf Hinweistafeln 24 der Stellplätze 2 ausgegeben werden.

Das Funkauslesen 16 der Funkkennung 14 mittels der Funkbake 15 gewährleistet damit eine störungsunanfällige Identifizierung eines einfahrenden Fahrzeuges 3, und die OCR-Kameraeinheiten 23 der Stellplätze 2 eine ortungsgenaue Lokalisierung und Validierung des geparkten Fahrzeuges 3.

Die Kameraeinheiten 23 können darüber hinaus zur Überprüfung der korrekten Parkposition bzw. -lage der Fahrzeuge 3 auf den Stellplätzen 2 herangezogen werden, indem sie die Bodenmarkierungen 7, 7' optisch überwachen bzw. auswerten. Ein über eine Farb-Bodenmarkierung 7 ragendes Fahrzeug 3 deckt diese zumindest teilweise ab, was im Kamerabild der Kameraeinheit(en) 23 detektiert werden kann. Ein über eine mittels Lichtfächers 9 projizierte Bodenmarkierung 7' ragendes Fahrzeug 3' verzerrt den vom Lichtfächer 9 projizierten Lichtstrich am Boden zu einem "profilierten" Lichtstrich 7" auf dem Fahrzeug 3', was im Kamerabild einer Kameraeinheit 23, welche nicht in derselben Ebene liegt wie der Lichtfächer 9, detektiert werden kann ("Lichtschnitt-Verfahren") .

Einer oder mehrere der Stellplätze 2 können überdies mit Ladestationen 25 ("Stromtankstellen") zum elektrischen Laden der parkenden Fahrzeuge 3 über ein Ladekabel 26 ausgestattet werden. Der Zentralrechner 18 kann in diesem Fall dafür programmiert sein, die Ladestation 25 bei einer erfolgreichen Funk-Identifizierung und OCR-Lokalisierung und -Validierung des Fahrzeuges 3 auf dem Stellplatz 2, d.h. wenn Funkkennung 14, Fahrzeugkennzeichen 11 und Stellplatznummer in der Stellplatzreservierung 20 einander zugeordnet sind, zum Laden des Fahrzeuges 3 freizuschalten.

Die Funkbake 15 kann dazu auch fahrzeugspezifische Ladeparameter wie Ladestrom, Ladekennlinie usw. aus der Onboard-Unit 12 funkauslesen und dem Zentralrechner 18 melden, welcher an die entsprechende Ladestation 25 sendet. Alternativ können fahrzeugspezifische Ladeparameter auch z.B. über das Webinterface 21 in die Datenbank 19 eingespeist und den Stellplatzreservierungen 20 hinzugefügt werden. Falls der Benutzer bereits registrierter Kunde des Parkplatzes ist, können die Daten in der Datenbank 19 des Zentralrechners 18 bereits bei OBU-Ausgabe an den Benutzer hinterlegt worden sein.

Die den Stellplätzen 2 zugeordneten Kameraeinheiten 23 können bei Stellplätzen 2 mit Ladestationen 25 auch zusätzlich zur Überwachung des Ladevorganges der Fahrzeuge 3 herangezogen werden, insbesondere zur Detektion von Überhitzungen oder Feuer. Dazu können die Kameraeinheiten 23 z.B. eine übermäßige Lichtentwicklung (Feuer) optisch detektieren, oder zusätzlich ein Wärmebild des abgestellten Fahrzeuges 3 aufnehmen, um bei einer Überschreitung einer Maximaltemperatur im Wärmebild einen Alarm auszulösen und/oder die Ladestation 25 sofort abzuschalten.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Parkplatz (1), mit
einer Vielzahl von Stellplätzen (2) für Fahrzeuge (3), die Kennzeichentafeln (10) mit OCR-lesbaren Fahrzeugkennzeichen (11) und Onboard-Units (12) mit funkauslesbaren Funkkennungen (15) haben,
einem Zentralrechner (18) zum Speichern von Stellplatzreservierungen (20) aus Stellplätzen (2) und zugeordneten Funkkennungen (14), und
einer den Stellplätzen (2) gemeinsamen Funkbake (15) an einer Einfahrt (5) des Parkplatzes (1) zum Funkauslesen (10) der Funkkennung (14) eines einfahrenden Fahrzeugs (3) und Melden an den Zentralrechner (18),
**dadurch gekennzeichnet,**
**dass** in jeder Stellplatzreservierung (20) ein der Funkkennung (14) zugeordnetes Fahrzeugkennzeichen (11) gespeichert ist,
**dass** für jeden Stellplatz (2) jeweils zumindest eine fest montierte Kameraeinheit (23) zum OCR-Lesen des Fahrzeugkennzeichens (11) eines darauf parkenden Fahrzeugs (3) und Melden an den Zentralrechner (18) vorgesehen ist, und
**dass** der Zentralrechner (18) dafür ausgebildet ist zu überprüfen, ob zu einer ihm gemeldeten Funkkennung (14) das in einer gespeicherten Stellplatzreservierung (20) zugeordnete Fahrzeugkennzeichen (11) anschließend von der Kameraeinheit (23) dieses Stellplatzes (2) gemeldet wird, und wenn nicht, dies zu protokollieren.

2. Parkplatz nach Anspruch 1, **dadurch gekennzeichnet, dass** zumindest ein Stellplatz (2) mit einer vom Zentralrechner (18) gesteuerten elektrischen Fahrzeug-Ladestation (25) ausgestattet ist, wobei der Zentralrechner (18) ferner dafür ausgebildet ist, nach erfolgreicher Überprüfung des von der Kameraeinheit (23) dieses Stellplatzes (2) gemeldeten Fahrzeugkennzeichens (11) die Ladestation (25) zum Laden freizuschalten.

3. Parkplatz nach Anspruch 2, **dadurch gekennzeichnet, dass** die Stellplatzreservierung (20) des genannten Stellplatzes (2) fahrzeugspezifische Ladeparameter enthält, welche der Zentralrechner (18) an die Ladestation (25) sendet.

4. Parkplatz nach Anspruch 3, **dadurch gekennzeichnet, dass** die fahrzeugspezifischen Ladeparameter von der Funkbake (15) aus der Onboard-Unit (12) ausgelesen und der Stellplatzreservierung (20) hinzugefügt werden.

5. Parkplatz nach einem der Ansprüche 2 bis 4, **dadurch gekennzeichnet, dass** die Kameraeinheit (23) des genannten Stellplatzes (2) auch ein Wärmebild des Fahrzeugs (3) während des Ladevorgangs aufnimmt, um bei Überschreitung einer Maximaltemperatur einen Alarm auszulösen.

6. Parkplatz nach einem der Ansprüche 1 bis 5, **dadurch gekennzeichnet, dass** an der Einfahrt (5) eine zusätzliche Kameraeinheit (17) zum OCR-Lesen des Fahrzeugkennzeichens (11) eines einfahrenden Fahrzeugs (3) und Melden an den Zentralrechner (18) montiert und der Zentralrechner (18) ferner dafür ausgebildet ist zu überprüfen, ob eine gemeldete Funkkennung (14) und ein von der zusätzlichen Kameraeinheit (17) gemeldetes Fahrzeugkennzeichen (11) einander in einer Stellplatzreservierung (20) zugeordnet sind, und wenn nicht, dies zu protokollieren.

7. Parkplatz nach einem der Ansprüche 1 bis 6, **dadurch gekennzeichnet, dass** an der Einfahrt (5) eine vom Zentralrechner (18) gesteuerte Anzeigetafel (22) montiert und der Zentralrechner (18) dafür ausgebildet ist, den Stellplatz (2), der einer ihm gemeldeten Funkkennung (14) in einer Stellplatzreservierung (20) zugeordnet ist, auf der Anzeigetafel (22) anzuzeigen.

8. Parkplatz nach einem der Ansprüche 1 bis 7, **dadurch gekennzeichnet, dass** die Funkbake (15) eine DSRC-Funkbake zum Funkauslesen (16) von Onboard-Units (12) eines DSRC-Straßenmautsystems ist.

9. Verfahren zur Reservierungskontrolle eines Parkplatzes (1) mit einer Vielzahl von Stellplätzen (2) für Fahrzeuge (3), die Kennzeichentafeln (10) mit OCR-lesbaren Fahrzeugkennzeichen (11) und Onboard-Units (12) mit funkauslesbaren Funkkennungen (15) haben, umfassend:
Speichern von Stellplatzreservierungen (20) aus Stellplätzen (2), Fahrzeugkennzeichen (11) und zugeordneten Funkkennungen (14) in einem Zentralrechner (18),
Funkauslesen (10) der Funkkennung (14) eines einfahrenden Fahrzeugs (3) mittels einer den Stellplätzen (2) gemeinsamen Funkbake (15) an einer Einfahrt (5) des Parkplatzes (1) und Melden an den Zentralrechner (18),
für jeden Stellplatz (2), OCR-Lesen des Fahrzeugkennzeichens (11) eines darauf parkenden Fahrzeugs (3) mittels jeweils zumindest einer fest montierten Kameraeinheit (23) und Melden an den Zentralrechner (18), und
Überprüfen im Zentralrechner (18), ob zu einer ihm gemeldeten Funkkennung (14) das in einer gespeicherten Stellplatzreservierung (20) zugeordnete Fahrzeugkennzeichen (11) anschließend von der Kameraeinheit (23) dieses Stellplatzes (2) gemeldet wird, und Protokollieren im Zentralrechner (18), wenn nicht.

10. Verfahren nach Anspruch 9 für einen Parkplatz, von dem zumindest ein Stellplatz (2) mit einer vom Zentralrechner (18) gesteuerten elektrischen Fahrzeug-Ladestation (25) ausgestattet ist, **dadurch gekennzeichnet, dass** der Zentralrechner (18) nach erfolgreicher Überprüfung des von der Kameraeinheit (23) dieses Stellplatzes (2) gemeldeten Fahrzeugkennzeichens (11) die Ladestation (25) zum Laden freischaltet.

11. Verfahren nach Anspruch 10, **dadurch gekennzeichnet, dass** die Stellplatzreservierung (20) des genannten Stellplatzes (2) fahrzeugspezifische Ladeparameter enthält, welche der Zentralrechner (18) an die Ladestation (25) sendet.

12. Verfahren nach Anspruch 11, **dadurch gekennzeichnet, dass** die fahrzeugspezifischen Ladeparameter von der Funkbake (15) aus der Onboard-Unit (12) ausgelesen und der Stellplatzreservierung (20) hinzugefügt werden.

13. Verfahren nach einem der Ansprüche 10 bis 12, **dadurch gekennzeichnet, dass** die Kameraeinheit (23) des genannten Stellplatzes (2) auch ein Wärmebild des Fahrzeugs (3) während des Ladevorgangs aufnimmt, um bei Überschreitung einer Maximaltemperatur einen Alarm auszulösen.

14. Verfahren nach einem der Ansprüche 9 bis 13 für einen Parkplatz, an dessen Einfahrt (5) eine zusätzliche Kameraeinheit (17) zum OCR-Lesen des Fahrzeugkennzeichens (11) eines einfahrenden Fahrzeugs (3) und Melden an den Zentralrechner (18) montiert ist, **dadurch gekennzeichnet, dass** der Zentralrechner (18) überprüft, ob eine gemeldete Funkkennung (14) und ein von der zusätzlichen Kameraeinheit (17) gemeldetes Fahrzeugkennzeichen (11) einander in einer Stellplatzreservierung (20) zugeordnet sind, und wenn nicht, dies protokolliert.

15. Verfahren nach einem der Ansprüche 9 bis 14, **dadurch gekennzeichnet, dass** der Zentralrechner (18) den Stellplatz (2), der einer ihm gemeldeten Funkkennung (14) in einer Stellplatzreservierung (20) zugeordnet ist, auf einer an der Einfahrt (5) montierten Anzeigetafel (22) anzeigt.

## Claims

1. A parking lot (1), comprising:
a plurality of parking spaces (2) for vehicles (3) that have license plates (10) with OCR-readable license numbers (11) and onboard units (12) with radio IDs (15) that can be read out via radio,
a central computer (18) for storing parking space reservations (20) each comprising a parking space (2) and an assigned radio ID (14), and
a common radio beacon (15) for the parking spaces (2) that is positioned at an entrance (5) of the parking lot (1) and serves for reading out (10) the radio ID (14) of an entering vehicle (3) via radio and correspondingly signaling the radio ID (14) to the central computer (18), **characterized in**
**that** in each parking space reservation (20) a vehicle license number (11) assigned to the radio ID (14) is stored,
**that** at least one stationarily mounted camera unit (23) for each parking space (2) is provided that serves for OCR reading the license number (11) of a vehicle (3) parked therein and correspondingly signaling the license number (11) to the central computer (18), and
**that** the central computer (18) is configured to check whether for a radio ID (14) signaled to the central computer the vehicle license number (11) assigned thereto in a stored parking space reservation (20) is subsequently signaled by the camera unit (23) of this parking space (2), and to log instances in which this is not the case.

2. The parking lot according to Claim 1, **characterized by** the fact that at least one parking space (2) is equipped with an electric vehicle charging station (25) that is controlled by the central computer (18), wherein the central computer (18) is furthermore configured to unlock the charging station (25) for charging the vehicle after successfully checking the vehicle license number signaled by the camera unit (23) of this parking space (2).

3. The parking lot according to Claim 2, **characterized by** the fact that the parking space reservation (20) for said parking space (2) contains charging parameters that are specific to the vehicle and transmitted to the charging station (25) by the central computer (18).

4. The parking lot according to Claim 3, **characterized by** the fact that the charging parameters specific to the vehicle are read from the onboard unit (12) by the radio beacon (15) and added to the parking space reservation (20).

5. The parking lot according to any one of the Claims 2 to 4, **characterized by** the fact that the camera unit (23) of said parking space (2) also records a thermal image of the vehicle (3) during the charging process in order to trigger an alarm if a maximum temperature is exceeded.

6. The parking lot according to any one of the Claims 1 to 5, **characterized by** the fact that an additional camera unit (17) for OCR reading the license number (11) of an entering vehicle (3) and signaling the license number (11) to the central computer (18) is mounted at the entrance (5), and by the fact that the central computer (18) is furthermore configured to check whether a signaled radio ID (14) and a vehicle license number (11) signaled by the additional camera unit (17) are assigned to one another in a parking space reservation (20), and to log instances in which this is not the case.

7. The parking lot according to any one of the Claims 1 to 6, **characterized by** the fact that a display panel (22) is mounted at the entrance (5) and controlled by the central computer (18), and by the fact that the central computer (18) is configured to display on the display panel (22), the parking space (2) that is assigned in a parking space reservation (20) to a radio ID (14) signaled to the central computer.

8. The parking lot according to any one of the Claims 1 to 7, **characterized by** the fact that the radio beacon (15) is a DSRC radio beacon for reading out (16) onboard units (12) of a DSRC road toll system via radio.

9. A method for checking the reservation of a parking lot (1) with a plurality of parking spaces (2) for vehicles (3) that have license plates (10) with OCR-readable license numbers (11) and onboard units (12) with radio IDs (15) that can be read out via radio, comprising:
storing parking space reservations (20) consisting of parking spaces (2), vehicle license numbers (11) and assigned radio IDs (14) in a central computer (18),
reading out (10) the radio ID (14) of an entering vehicle (3) via radio by means of a common radio beacon (15) for the parking spaces (2) that is positioned at an entrance (5) of the parking lot (1) and signaling the radio ID (14) to the central computer (18), and
for each parking space (2), OCR reading the license number (11) of a vehicle (3) parked therein by means of at least one stationarily mounted camera unit (23) and signaling the license number (11) to the central computer (18), and
checking in the central computer (18) whether for a radio ID (14) signaled to the central computer the vehicle license number (11) assigned thereto in a stored parking space reservation (20) is subsequently signaled by the camera unit (23) of this parking space (2), and logging instances in which this is not the case.

10. The method according to Claim 9 for a parking lot of which at least one parking space (2) is equipped with an electric vehicle charging station (25) that is controlled by the central computer (18), **characterized in that** the central computer (18) unlocks the charging station (25) for charging the vehicle after successfully checking the vehicle license number signaled by the camera unit (23) of this parking space (2).

11. The method according to Claim 10, **characterized in that** the parking space reservation (20) for said parking space (2) contains charging parameters that are specific to the vehicle and transmitted to the charging station (25) by the central computer (18).

12. The method according to Claim 11, **characterized in that** the charging parameters specific to the vehicle are read from the onboard unit (12) by the radio beacon (15) and added to the parking space reservation (20).

13. The method according to any one of the Claims 10 to 12, **characterized in** fact that the camera unit (23) of said parking space (2) also records a thermal image of the vehicle (3) during the charging process in order to trigger an alarm if a maximum temperature is exceeded.

14. The method according to any one of the Claims 9 to 13 for a parking lot at the entrance (5) of which an additional camera unit (17) for OCR reading the license number (11) of an entering vehicle (3) and signaling the license number (11) to the central computer (18) is mounted, **characterized in that** the central computer (18) checks whether a signaled radio ID (14) and a vehicle license number (11) signaled by the additional camera unit (17) are assigned to one another in a parking space reservation (20), and logs instances in which this is not the case.

15. The method according to any one of the Claims 9 to 14, **characterized in that** the central computer (18) displays, on a display panel (22) mounted at the entrance (5), the parking space (2) that is assigned in a parking space reservation (20) to a radio ID (14) signaled to the central computer.

## Revendications

1. Parc de stationnement (1), comprenant
une pluralité d'emplacements de stationnement (2) pour des véhicules (3), qui sont dotés de plaques d'immatriculation (10) comportant des immatriculations de véhicule (11) lisibles par reconnaissance optique de caractères et de dispositifs embarqués (12) présentant des caractéristiques d'identification radio (15) lisibles à distance par radio,
un ordinateur central (18) servant à mémoriser des réservations d'emplacement de stationnement (20) comprenant des emplacements de stationnement (2) et des caractéristiques d'identification radio (14) associées, et
une balise radio (15) commune aux emplacements de stationnement (2) au niveau d'une entrée (5) du parc de stationnement (1) servant à lire à distance par radio (10) la caractéristique d'identification radio (14) d'un véhicule (3) entrant et servant à notifier cette dernière à l'ordinateur central (18),
**caractérisé en ce**
**qu'**une immatriculation de véhicule (11) associée à une caractéristique d'identification radio (14) est mémorisée dans chaque réservation d'emplacement de stationnement (20),
et en ce que respectivement pour chaque emplacement de stationnement (2), au moins une unité de caméra (23) montée de manière immobile est prévue pour lire par reconnaissance optique de caractères l'immatriculation de véhicule (11) d'un véhicule (3) en cours de stationnement et pour notifier cette dernière à l'ordinateur central (18), et
en ce que l'ordinateur central (18) est réalisé pour vérifier si pour une caractéristique d'identification radio (14) qui lui a été notifiée, l'immatriculation de véhicule (11) associée figurant dans une réservation d'emplacement de stationnement (20) mémorisée est ensuite notifiée par l'unité de caméra (23) dudit emplacement de stationnement (2), et dans le cas contraire pour enregistrer ce fait.

2. Parc de stationnement selon la revendication 1, **caractérisé en ce qu'**au moins un emplacement de stationnement (2) est équipé d'un poste de charge de véhicule (25) électrique commandé par l'ordinateur central (18), sachant que l'ordinateur central (18) est réalisé en outre pour activer le poste de charge (25) aux fins de la recharge après avoir vérifié avec succès l'immatriculation de véhicule (11) notifiée par l'unité de caméra (23) dudit emplacement de stationnement (2).

3. Parc de stationnement selon la revendication 2, **caractérisé en ce que** la réservation d'emplacement de stationnement (20) dudit emplacement de stationnement (2) évoqué contient les paramètres de charge spécifiques au véhicule, que l'ordinateur central (18) envoie au poste de charge (25).

4. Parc de stationnement selon la revendication 3, **caractérisé en ce que** les paramètres de charge spécifiques au véhicule sont lus par la balise radio (15) depuis le dispositif embarqué (12) et sont joints à la réservation d'emplacement de stationnement (20).

5. Parc de stationnement selon l'une quelconque des revendications 2 à 4, **caractérisé en ce que** l'unité de caméra (23) de l'emplacement de stationnement (2) évoqué enregistre également une image thermique du véhicule (3) lors du processus de charge afin de déclencher une alarme en cas de dépassement d'une température maximale.

6. Parc de stationnement selon l'une quelconque des revendications 1 à 5, **caractérisé en ce qu'**une unité de caméra supplémentaire (17) servant à lire par reconnaissance optique de caractères l'immatriculation de véhicule (11) d'un véhicule (3) entrant et servant à notifier cette dernière à l'ordinateur central (18) est montée au niveau de l'entrée (5), et **en ce que** l'ordinateur central (18) est en outre réalisé pour vérifier si une caractéristique d'identification radio (14) notifiée et si une immatriculation de véhicule (11) notifiée par l'unité de caméra supplémentaire (17) sont associées l'une et l'autre dans une réservation d'emplacement de stationnement (20) et pour, dans le cas contraire, enregistrer ce fait.

7. Parc de stationnement selon l'une quelconque des revendications 1 à 6, **caractérisé en ce qu'**un panneau d'affichage (22) commandé par l'ordinateur central (18) est monté au niveau de l'entrée (5), et **en ce que** l'ordinateur central (18) est réalisé pour afficher sur le panneau d'affichage (22) l'emplacement de stationnement (2), qui est associé à une caractéristique d'identification radio (14) qui lui a été notifiée figurant dans une réservation d'emplacement de stationnement (20).

8. Parc de stationnement selon l'une quelconque des revendications 1 à 7, **caractérisé en ce que** la balise radio (15) est une balise radio DSRC servant à lire à distance par radio (16) des dispositifs embarqués (12) d'un système de péage autoroutier DSRC.

9. Procédé servant à contrôler une réservation d'un parc de stationnement (1) présentant une pluralité d'emplacements de stationnement (2) pour des véhicules (3), qui sont dotés de plaques d'immatriculation (10) comportant des immatriculations de véhicule (11) lisibles par reconnaissance optique de caractères et de dispositifs embarqués (12) présentant des caractéristiques d'identification radio (15) lisibles à distance par radio, comprenant les étapes suivantes consistant à :
mémoriser des réservations d'emplacement de stationnement (20) comprenant des emplacements de stationnement (2), des immatriculations de véhicule (11) et des caractéristiques d'identification radio (14) associées dans un ordinateur central (18),
lire à distance par radio (10) la caractéristique d'identification radio (14) d'un véhicule (3) entrant au moyen d'une balise radio (15) commune aux emplacements de stationnement (2) à une entrée (5) du parc de stationnement (1), et notifier cette dernière à l'ordinateur central (18),
lire, pour chaque emplacement de stationnement (2), par reconnaissance optique de caractères l'immatriculation de véhicule (11) d'un véhicule (3) en cours de stationnement au moyen respectivement d'au moins une unité de caméra (23) montée de manière immobile, et notifier cette dernière à l'ordinateur central (18), et
vérifier dans l'ordinateur central (18) si pour une caractéristique d'identification radio (14) qui lui a été notifiée, l'immatriculation de véhicule (11) associée figurant dans une réservation d'emplacement de stationnement (20) mémorisée est ensuite notifiée par l'unité de caméra (23) dudit emplacement de stationnement (2), et dans le cas contraire, enregistrer ce fait dans l'ordinateur central (18).

10. Procédé selon la revendication 9 pour un parc de stationnement, dont au moins un emplacement de stationnement (2) est équipé d'un poste de charge de véhicule (25) électrique commandé par l'ordinateur central (18), **caractérisé en ce que** l'ordinateur central (18) active le poste de charge (25) aux fins de la recharge après avoir vérifié avec succès l'immatriculation de véhicule (11) notifiée par l'unité de caméra (23) dudit emplacement de stationnement (2).

11. Procédé selon la revendication 10, **caractérisé en ce que** la réservation d'emplacement de stationnement (20) dudit emplacement de stationnement (2) contient des paramètres de charge spécifiques au véhicule, que l'ordinateur central (18) envoie au poste de charge (25).

12. Procédé selon la revendication 11, **caractérisé en ce que** les paramètres de charge spécifiques au véhicule sont lus par la balise radio (15) depuis le dispositif embarqué (12) et sont joints à la réservation d'emplacement de stationnement (20).

13. Procédé selon l'une quelconque des revendications 10 à 12, **caractérisé en ce que** l'unité de caméra (23) de l'emplacement de stationnement (2) évoqué enregistre également une image thermique du véhicule (3) lors du processus de charge, afin de déclencher une alarme en cas de dépassement d'une température maximale.

14. Procédé selon l'une quelconque des revendications 9 à 13 pour un parc de stationnement, à l'entrée (5) duquel est montée une unité de caméra supplémentaire (17) servant à lire par reconnaissance optique de caractères l'immatriculation de véhicule (11) d'un véhicule (3) entrant et servant à notifier cette dernière à l'ordinateur central (18), **caractérisé en ce que** l'ordinateur central (18) vérifie si une caractéristique d'identification radio (14) notifiée et une immatriculation de véhicule (11) notifiée par l'unité de caméra supplémentaire (17) sont associées l'une à l'autre dans une réservation d'emplacement de stationnement (20), et dans le cas contraire, enregistre ce fait.

15. Procédé selon l'une quelconque des revendications 9 à 14, **caractérisé en ce que** l'ordinateur central (18) affiche sur un panneau d'affichage (22) monté à l'entrée (5) l'emplacement de stationnement (2) qui est associé à une caractéristique d'identification radio (14) qui lui a été notifiée figurant dans une réservation d'emplacement de stationnement (20).
